Europäisches Patentamt

European Patent Office

Office européen des brevets

(11) Veröffentlichungsnummer: **0 395 780**

**A1**

(12) **EUROPÄISCHE PATENTANMELDUNG**

(21) Anmeldenummer: **89108059.0**

(22) Anmeldetag: **03.05.89**

(51) Int. Cl.⁵: **H04J 3/16**

(43) Veröffentlichungstag der Anmeldung:
**07.11.90 Patentblatt 90/45**

(84) Benannte Vertragsstaaten:
**AT BE CH DE ES FR GB GR IT LI NL SE**

(71) Anmelder: **Siemens Aktiengesellschaft**
**Wittelsbacherplatz 2**
**D-8000 München 2(DE)**
㊴ **AT BE CH DE ES FR GB GR IT LI NL SE**

Anmelder: **SIEMENS-ALBIS**
**AKTIENGESELLSCHAFT**
**PV/Patente und Verträge Postfach**
**CH-8047 Zürich(CH)**
㊴ **CH LI**

(72) Erfinder: **Ehricke, Claus, Dipl.-Ing.**
**Schuckertstrasse 14**
**D-8000 München 70(DE)**
Erfinder: **Aepli, Thomas**
**Einhardweg 4**
**CH-8603 Schwerzenbach(CH)**

(54) **Flexibler Multiplexer.**

㉕ Eine Reduzierung der Multiplexsignalleitungen ergibt sich, wenn nicht mehr alle Kanaleinheiten in teilnehmerseitigen Anschlußeinheiten (7b-11b) und alle leitungsseitigen Anschlußeinheiten (12b-14b) mit jeder Multiplexleitung verbunden sind, sondern wenn Gruppen von teilnehmerseitigen Anschlußeinheiten (7b-8b; 9b-10b; 11b) und alle leitungsseitigen Anschlußeinheiten (14b-16b) jeweils über eine "kommende" (36a, 36b) und eine "gehende" (35a, 35b) Sprache/Daten-Multiplexsignalleitung mit einem Sprache/Daten-Koppelfeld (29) und über eine "kommende" (38a, 38b) und eine "gehende" (37a, 37b) Kennzeichen-Multiplexsignalleitung mit einem Kennzeichen-Koppelfeld (30) verbunden sind.

Ein flexibler Multiplexer ermöglicht Verbindungen zwischen teilnehmerseitigen Anschlußeinheiten, eine Bündelung und Trennung von Multiplexsignalen zwischen teilnehmerseitigen und leitungsseitigen Anschlußeinheiten sowie eine Kanalverteilung zwischen leitungsseitigen Anschlußeinheiten.

FIG 4

## Flexibler Multiplexer

Die Erfindung bezieht sich auf einen flexiblen Multiplexer mit teilnehmerseitigen Anschlußeinheiten, die Kanaleinheiten jeweils mit einem äußeren Sprache/Dateneingang, mit einem äußeren Sprache/Datenausgang, mit einem äußeren Kennzeicheneingang und mit einem äußeren Kennzeichenausgang enthalten, mit leitungsseitigen Anschlußeinheiten, die einen äußeren Multiplexsignaleingang und einen äußeren Multiplexsignalausgang enthalten, mit Sprache/Daten-Multiplexleitungen und mit Kennzeichen-Multiplexleitungen, die die Anschlußeinheiten verbinden, und mit einer Steuereinrichtung, die über einen Steuerbus mit den Anschlußeinheiten verbunden ist.

Ein derartiges Multiplexgerät ist aus der Druckschrift "PDMX-programmierbarer Digitalmultiplexer für die 2-Mbit/s-Netzebene", herausgegeben von der Siemens AG, Bereich Übertragungssysteme, Postfach 700073, Bestell-Nr. A42020-S154-A1-2-29 bekannt.

Dieser flexible Multiplexer ermöglicht eine freizügige Bündelung und Verteilung von Zeitabschnitten digitaler Multiplexsignale in einem Zeitmultiplexgerät. Es sind Verbindungen zwischen teilnehmerseitigen Anschlußeinheiten, Verbindungen mehrerer teilnehmerseitiger Anschlußeinheiten mit einer oder mehreren leitungsseitigen Anschlußeinheiten und/oder eine Kanalverteilung (cross-connect) zwischen leitungsseitigen Anschlußeinheiten möglich. Die Kennzeichen werden derart umgesetzt, daß sie die entsprechenden Kanäle wie Sprach- oder Datensignale einnehmen. Unter teilnehmerseitigen Anschlußeinheiten sind Fernsprecheinrichtungen, Dateneinrichtungen sowie Subraten-Multiplexeinrichtungen zu verstehen. Leitungsseitige Anschlußeinheiten dienen dem Senden oder dem Empfang von Multiplexsignalen beispielsweise mit Bitraten von 1,544 Mbit/s oder 2,048 Mbit/s.

Beim bekannten flexiblen Multiplexer können alle Kanaleinheiten aller teilnehmerseitigen Anschlußeinheiten und alle leitungsseitigen Anschlußeinheiten über ein Bussystem mit einer Vielzahl von Multiplexleitungen untereinander rangiert werden.

Der Erfindung liegt die Aufgabe zugrunde, diesen flexiblen Multiplexer insbesondere für den Fall zu vereinfachen, daß eine sehr große Anzahl von Anschlußeinheiten bedient werden soll.

Diese Aufgabe wird erfindungsgemäß mit den Merkmalen des Anspruchs 1 gelöst. "Kommend" und "gehend" bezieht sich jeweils auf die betrachtete Anschlußeinheit. Ausgestaltungen der Erfindung sind den Unteransprüchen zu entnehmen.

Die Erfindung beruht auf der Erkenntnis, daß das Bussystem einfacher wird, wenn Gruppen von teilnehmerseitigen Anschlußeinheiten und leitungsseitige Anschlußeinheiten pro Richtung über jeweils nur eine Multiplexleitung mit einem Sprache/Daten-Koppelfeld und einem Kennzeichen-Koppelfeld verbunden sind. Die Koppelfelder übernehmen dabei die freizügige Rangierung und werden von einer Steuereinrichtung entsprechend gesteuert.

Anhand von Ausführungsbeispielen wird die Erfindung nachstehend näher erläutert.

Fig.1 zeigt ein Blockschaltbild eines flexiblen Multiplexers nach dem Stand der Technik,

Fig.2 zeigt eine teilnehmerseitige Anschlußeinheit nach dem Stand der Technik,

Fig.3 zeigt eine leitungsseitige Anschlußeinheit nach dem Stand der Technik,

Fig.4 zeigt ein Blockschaltbild eines erfindungsgemäßen flexiblen Multiplexers,

Fig.5 zeigt eine erfindungsgemäße teilnehmerseitige Anschlußeinheit und

Fig.6 zeigt eine erfindungsgemäße leitungsseitige Anschlußeinheit

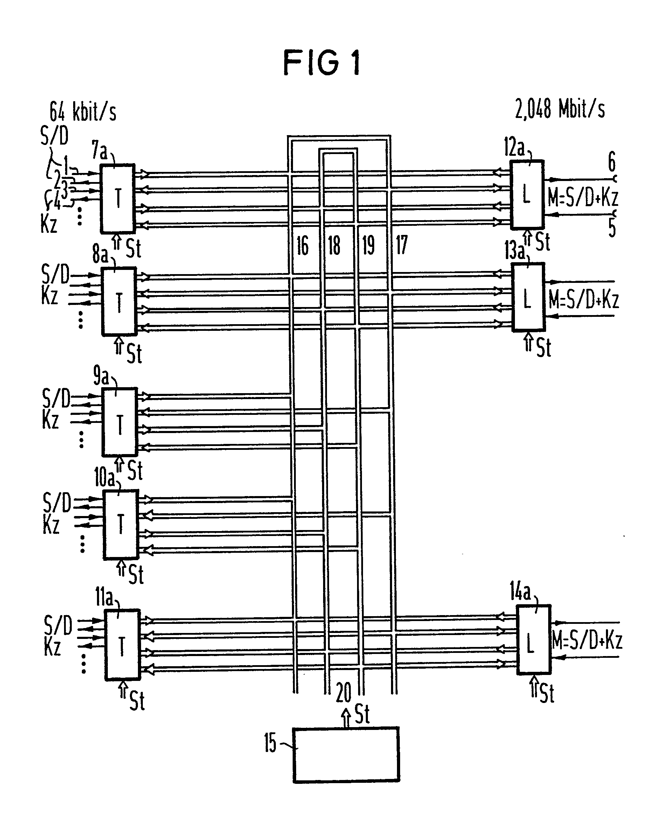

Fig.1 zeigt ein Blockschaltbild des bekannten flexiblen Multiplexers. Dieser enthält teilnehmerseitige Anschlußeinheiten 7a bis 11a, die zusätzlich mit T bezeichnet sind, leitungsseitige Anschlußeinheiten 12a bis 14a, die auch mit L bezeichnet sind, eine Steuereinrichtung 15, Sprache/Daten-Multiplexsignal-Leitungsbündel 16 und 17, Kennzeichen-Multiplexsignal-Leitungsbündel 18 und 19 sowie einen Steuerbus 20. Fernsprechsignale, Daten und Subraten-Multiplexsignale werden zusammenfassend als Sprache/Daten-Signale S/D und Kennzeichensignale mit Kz bezeichnet. Bevor die Wirkungsweise dieses Multiplexers erläutert wird, werden noch die Anschlußeinheiten beschrieben:

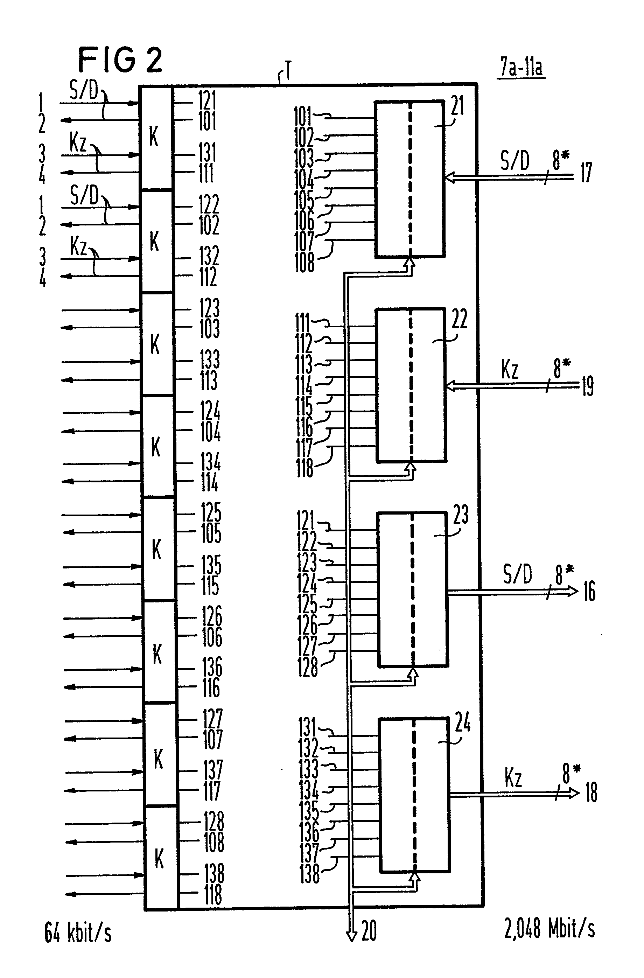

Fig.2 zeigt eine bekannte teilnehmerseitige Anschlußeinheit T mit acht Kanaleinheiten K, mit Zeit/Raum/Raum-Kopplern 21 und 22 sowie Raum/Raum/Zeit-Kopplern 23 und 24.

Den Kanaleinheiten K werden Sprache/Datensignale S/D über einen äußeren Sprache/Dateneingang 1 und Kennzeichensignale Kz über einen äußeren Kennzeicheneingang 3 zugeführt. Entnommen werden Sprache/Datensignale S/D über einen äußeren Sprache/Datenausgang 2 und Kennzeichensignale Kz über einen äußeren Kennzeichenausgang 4. Sprache/Datensignale S/D und Kennzeichensignale Kz weisen hier eine Bitrate von gleich oder kleiner 64 kbit/s auf. Die Verbindungen zwischen den Kanaleinheiten K einerseits und den Zeit/Raum/Raum-Kopplern 21 und 22 und den Raum/Raum/ZeitKopplern 23 und 24 andererseits sind durch Paare dreistelliger Zahlen angegeben.

Über das Sprache/Daten-Multiplexsignal-Leitungsbündel 17 in Zeitschlitzen eintreffende Sprache/Datensignale S/D werden im Zeit/Raum/Raum-Koppler 21 umgesetzt und auf die äußeren Sprache/Datenausgänge 2 verteilt. Entsprechend werden die über das Kennzeichen-Multiplexsignal-Leitungsbündel 19 in Zeitschlitzen eintreffenden Kennzeichensignale Kz im Zeit/Raum/Raum-Koppler 22 umgesetzt und auf die äußeren Kennzeichenausgänge 4 verteilt. Ziffern mit einem Stern zeigen an, wieviele Leitungen parallel im Leitungsbündel enthalten sind. An den äußeren Sprache/Daten eingängen 1 eintreffenden Sprache/Datensignale S/D werden dem Raum/Raum/Zeit-Koppler 23 zugeführt, in Zeitschlitze umgesetzt und über das Sprache/Daten-Multiplexsignal-Leitungsbündel 16 abgegeben. Entsprechend werden die an den äußeren Kennzeicheneingängen 3 eintreffende Kennzeichensignale Kz im Raum/Raum/Zeit-Koppler 24 in Zeitschlitze umgesetzt und über das Kennzeichen-Multiplexsignal-Leitungsbündel 18 abgegeben.

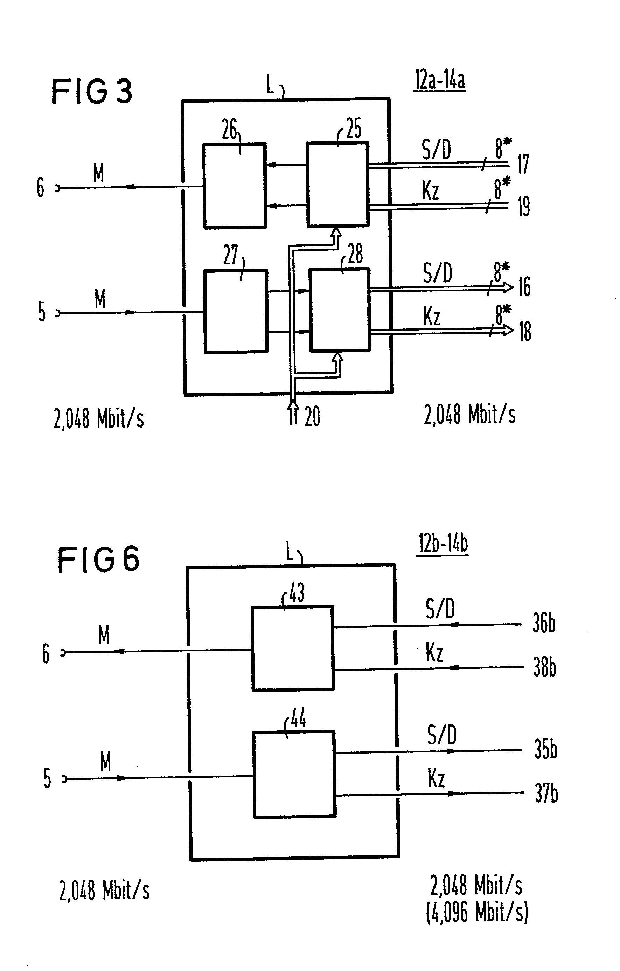

Fig.3 zeigt eine bekannte leitungsseitige Anschlußeinheit L. Diese enthält Raum/Raum-Koppler 25 und 28, einen Rahmenmultiplexer 26 und einen Rahmendemultiplexer 27.

Vom Sprache/Daten-Multiplexsignal-Leitungsbündel 17 und vom Kennzeichen-Multiplexsignal-Leitungsbündel 19 wird im Raum/Raum-Koppler 25 jeweils eine Multiplexsignalleitung durch die Steuereinrichtung 15 ausgewählt. Handelt es sich um 2,048-Mbit/s-Signale, dann werden die Kennzeichensignale Kz im Rahmenmultiplexer 26 in 4-bit-Kennzeichenwörter umgesetzt und in den 16-ten Zeitschlitz eines zu bildenden kompletten 2,048-Mbit/s-Signals M eingefügt, das über den äußeren Multiplexsignalausgang 6 abgegeben wird. Zwischen dem äußeren Multiplexsignaleingang 5 einerseits und dem Sprache/Daten-Multiplexsignal-Leitungsbündel 16 sowie dem Kennzeichen-Multiplexsignal-Leitungsbündel 18 andererseits erfolgt eine gegensätzliche Umsetzung.

Im flexiblen Multiplexer nach Fig.1 sind Verbindungen zwischen teilnehmerseitigen Anschlußeinheiten 7a bis 11a oder zwischen mehreren der teilnehmerseitigen Anschlußeinheiten 7a bis 11a und wenigstens einer leitungsseitigen Anschlußeinheit 12a bis 14a über die Sprache/Daten-Multiplexsignal-Leitungsbündel 16 und 17 und die Kennzeichen-Multiplexsignal-Leitungsbündel 18 und 19 herstellbar. Weiter ist eine Kanalverteilung zwischen leitungsseitigen Anschlußeinheiten 12a bis 14a durchführbar. Bei diesem flexiblen Multiplexer ist jede Multiplexsignalleitung in jedem Sprache/Daten- und jedem Kennzeichen-Multiplexsignal-Leitungsbündel jeder teilnehmerseitigen Anschlußeinheit T und mit jeder leitungsseitigen Anschlußeinheit L verbunden.

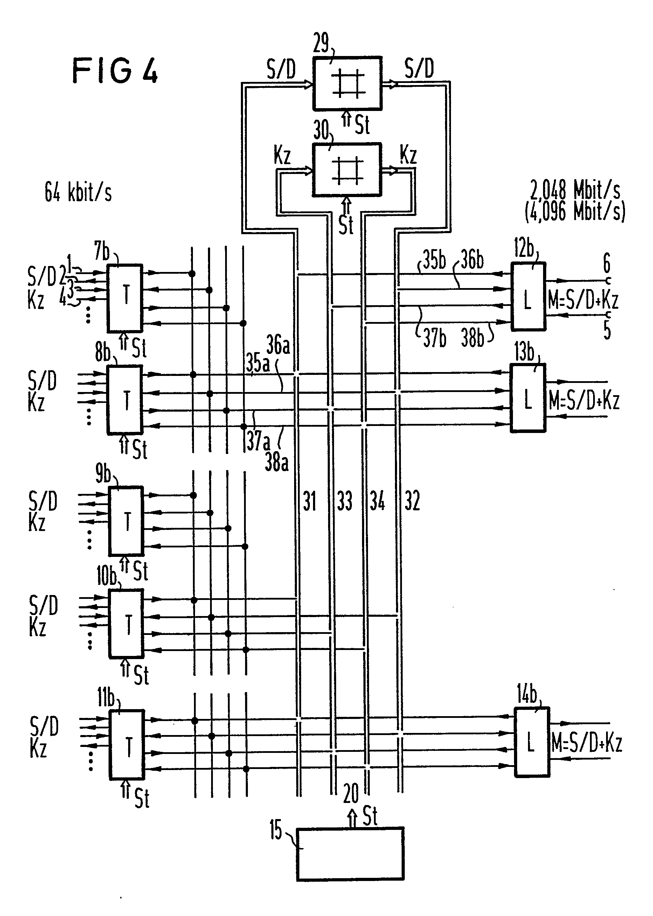

Fig.4 zeigt das Blockschaltbild eines erfindungsgemäßen flexiblen Multiplexers. Dieser enthält teilnehmerseitige Anschlußeinheiten 7b bis 11b, leitungsseitige Anschlußeinheiten 12b bis 14b, die Steuereinrichtung 15, ein Sprache/Daten-Koppelfeld 29, ein Kennzeichen-Koppelfeld 30, Sprache/Daten-Multiplexsignal-Leitungsbündel 31 und 32, Kennzeichen-Multiplexsignal-Leitungsbündel 33 und 34, Sprache/Daten-Multiplexsignalleitungen 35a, 35b, 36a und 36b, Kennzeichen-Multiplexsignalleitungen 37a, 37b, 38a und 38b und den Steuerbus 20. Auch hier werden zunächst die Anschlußeinheiten beschrieben:

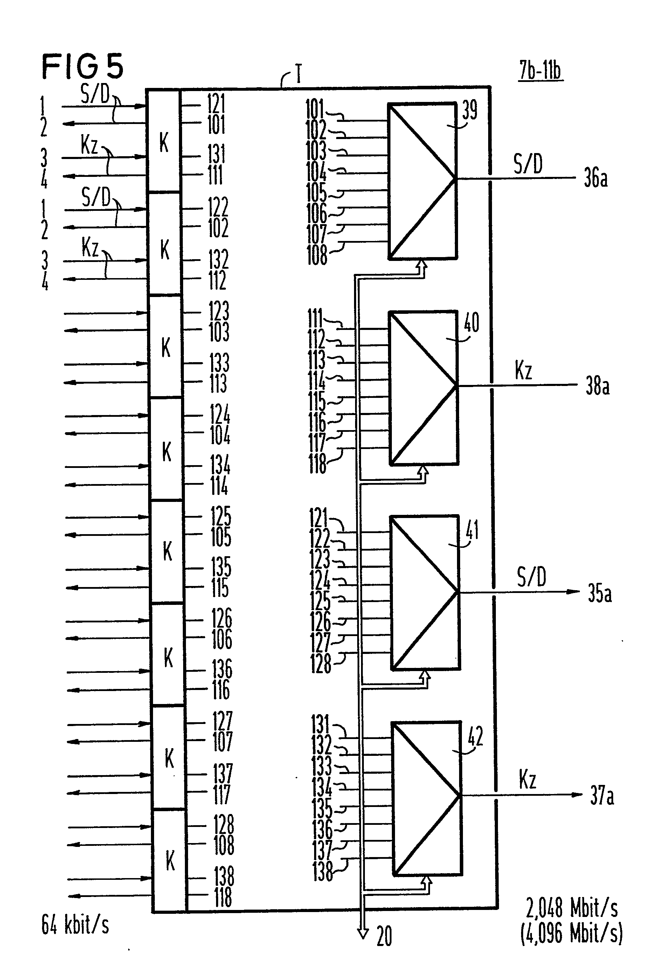

Fig.5 zeigt eine erfindungsgemäße teilnehmerseitige Anschlußeinheit T. Diese unterscheidet sich von der bekannten nach Fig.2 dadurch, daß die Zeit/Raum-Koppler 39 und 40 und die Raum/Zeit-Koppler mit dem Bussystem 31-34 lediglich über jeweils eine Multiplexsignalleitung 35a bis 38a verbunden sind.

Die teilnehmerseitige Anschlußeinheit T nach Fig.5 kann derart modifiziert werden, daß die doppelte oder vierfache Anzahl von Kanaleinheiten K verwendet wird, wenn diese für Signale gleich oder kleiner 32 kbit/s oder gleich oder kleiner 16 kbit/s angelegt sind. Im ersten Fall werden beispielsweise die kanaleinheitsseitigen Anschlüsse 121 und 122 mit dem Anschluß 121 des Raum/Zeit-Kopplers 41 und die kanaleinheitsseitigen Anschlüsse 123 und 124 mit dem Anschluß 122 dieses Raum/Zeit-Kopplers 41 usw. verbunden. Im zweiten Fall werden beispielsweise die kanaleinheitsseitigen Anschlüsse 121 bis 124 mit dem Anschluß 121 des Raum/Zeit-Kopplers 41 zusammengeschaltet usw.

Fig.6 zeigt eine erfindungsgemäße leitungsseitige Anschlußeinheit L mit einem Rahmenmultiplexer 43 und einem Rahmendemultiplexer 44. Auch hier sind im Gegensatz zu Fig.3 auf der Seite des Bussystems 31-34 nur jeweils eine Sprache/Daten-Multiplexsignalleitung 35b und 36b und jeweils nur eine Kennzeichen-Multiplexsignalleitung 37b und 38b angeschlossen. Auch hier werden die Kennzeichensignale Kz in 4-bit-Kennzeichenwörter und umgekehrt umgesetzt.

In Fig.4 sind die teilnehmerseitigen Anschlußeinheiten T gruppenweise angeschlossen. So bilden beispielsweise die teilnehmerseitigen Anschlußeinheiten 7b und 8b und weitere nicht gezeigte teilnehmerseitige Anschlußeinheiten eine Gruppe, die jeweils über vier Multiplexsignalleitungen 35a bis 38a mit dem von den Koppelfeldern 29 und 30 sternförmig ausgehenden Bussystem 31 bis 34 verbunden sind. Die leitungsseitige Anschlußeinheit 12b wird beispielsweise über vier Multiplexsignalleitungen 35b bis 38b mit dem Bussystem 31 bis 34 verbunden.

Der erfindungsgemäße flexible Multiplexer unterscheidet sich vom bekannten dadurch, daß Kop-

pelfunktionen aus den teilnehmerseitigen Anschluß-einheiten T in die Koppelfelder 29 und 30 verlagert sind.

Während beim bekannten flexiblen Multiplexer eine Erweiterung auf mehr Anschlußeinheiten nur durch Erweitern des gesamten Bussystems möglich ist, müssen beim erfindungsgemäßen flexiblen Multiplexer lediglich die Koppelfelder erweitert und zusätzlich Multiplexleitungen zu den neuen Anschlußeinheiten geführt werden.

Der erfindungsgemäße flexible Multiplexer kann intern beispielsweise auch mit einer Bitrate von 4,096 Mbit/s betrieben werden. Dadurch kann die Anzahl der teilnehmerseitigen Anschlußeinheiten T bei gleichbleibender Anzahl von Multiplexsignalleitungen verdoppelt werden. Zwei Gruppen von teilnehmerseitigen Anschlußeinheiten T teilen sich dann in die vier Multiplexsignalleitungen 35a, 36a, 37a und 38a. Weiter können dann zwei leitungsseitige Anschlußeinheiten L jeweils gemeinsam auf die vier Multiplexsignalleitungen 35b, 36b, 37b und 38b arbeiten.

Die Koppelfelder 29 und 30 sind mit integrierten Schaltungen PEB 2040 und die Anschlußeinheiten 7b bis 14 b sind unter anderem mit integrierten Schaltungen PEB 2050 realisierbar.

## Ansprüche

1. Flexibler Multiplexer
mit teilnehmerseitigen Anschlußeinheiten (7b-11b), die Kanaleinheiten (K) jeweils mit einem äußeren Sprache/Dateneingang (1), mit einem äußeren Sprache/Datenausgang (2), mit einem äußeren Kennzeicheneingang (3) und mit einem äußeren Kennzeichenausgang (4) aufweisen,
mit leitungsseitigen Anschlußeinheiten (12b-14b), die einen äußeren Multiplexsignaleingang (5) und einen äußeren Multiplexsignalausgang (6) enthalten,
mit Sprache/Daten-Multiplexsignalleitungen (31, 32) und mit Kennzeichen-Multiplexsignalleitungen (33, 34), die die Anschlußeinheiten (7b-14b) verbinden, und
mit einer Steuereinrichtung (15), die über einen Steuerbus (20) mit den Anschlußeinheiten (7b-11b) verbunden ist, dadurch gekennzeichnet,
daß die teilnehmerseitigen Anschlußeinheiten (7b-11b) mit je einem inneren Anschluß für eine "kommende" Sprache/Daten-Multiplexsignalleitung (36a), für eine "kommende" Kennzeichen-Multiplexsignalleitung (38a), für eine "gehende" Sprache/Daten-Multiplexsignalleitung (35a) und für eine "gehende" Kennzeichen-Multiplexsignalleitung (37a) ausgerüstet sind und einen ersten Zeit/Raum-Koppler (39), der Kanäle auf der "kommenden" Sprache/ Daten-Multiplexsignalleitung (36a) mit ausgewählten äußeren Sprache/Datenausgängen (2) verbindet, einen zweiten Zeit/Raum-Koppler (40), der Kanäle auf der "kommenden" Kennzeichen-Multiplexleitung (38a) mit ausgewählten Kennzeichenausgängen (4) verbindet, einen ersten Raum/Zeit-Koppler (41), der äußere Dateneingänge (1) mit ausgewählten Kanälen auf der "gehenden" Sprache/Daten-Multiplexsignalleitung (35a) verbindet, und einen zweiten Raum/Zeit-Koppler (42) enthalten, der äußere Kennzeicheneingänge (3) mit ausgewählten Kanälen auf der "gehenden" Kennzeichen-Multiplexsignalleitung (37a) verbindet, aufweisen, daß die leitungsseitigen Anschlußeinheiten (12b-14b) mit je einem inneren Anschluß für eine "kommende" Sprache/Daten-Multiplexsignalleitung (36b), für eine "kommende" Kennzeichen-Mul tiplexsignalleitung (38b), für eine "gehende" Sprache/Daten-Multiplexsignalleitung (35b) und für eine"gehende" Kennzeichen-Multiplexsignalleitung (37b) versehen sind und einen Rahmenmultiplexer (43), der die Sprache/Datensignale (S/D) auf der "kommenden" Sprache/Daten-Multiplexsignalleitung (36b) und die Kennzeichensignale (Kz) auf der "kommenden" Kennzeichen-Multiplexsignalleitung (38b) verschachtelt und an den äußeren Multiplexsignalausgang (6) abgibt, und einen Rahmendemultiplexer (44) enthalten, der die Sprache/Datensignale (S/D) und die Kennzeichensignale (Kz) am äußeren Multiplexsignaleingang (5) trennt und an die "gehende" Sprache/Daten-Multiplexsignalleitung (35b) und an die "gehende" Kennzeichen-Multiplexsignalleitung (37b) abgibt, daß ein Sprache/Daten-Koppelfeld (29) vorgesehen ist, daß ein Kennzeichen-Koppelfeld (30) vorgesehen ist, daß jeweils nur eine Sprache/Daten-Multiplexsignalleitung (35a; 35b) zwischen einer Gruppe von teilnehmerseitigen Anschlußeinheiten (7b, 8b; 9b, 10b; 11b) bzw. einer leitungsseitigen Anschlußeinheit (12b; 13b; 14b) einerseits und dem Sprache/Daten-Koppelfeld (29) andererseits und umgekehrt vorgesehen ist, daß jeweils nur eine Kennzeichen-Multiplexsignalleitung (37a; 37b) zwischen einer Gruppe von teilnehmerseitigen Anschlußeinheiten (7b, 8b; 9b, 10b; 11b) bzw. einer leitungsseitigen Anschlußeinheit (12b; 13b; 14b) einerseits und dem Kennzeichen-Koppelfeld (30) andererseits und umgekehrt vorgesehen ist und daß die Steuereinrichtung (15) über den Steuerbus (20) auch mit dem Sprache/Daten-Koppelfeld (29) und mit dem Kennzeichen-Koppelfeld (30) verbunden ist.

2. Flexibler Multiplexer nach Anspruch 1, dadurch gekennzeichnet,
daß in den teilnehmerseitigen Anschlußeinheiten (7b-11b) Kanaleinheiten (K) mit einem äußeren Sprache/Dateneingang (1), mit einem äußeren Sprache/Datenausgang (2), mit einem äußeren Kennzeicheneingang (3) und mit einem äußeren Kennzeichenausgang (4) für jeweils gleich oder kleiner 64 kbit/s, zwischen den "kommenden" Multiplexsignalleitungen (36a, 38a) und den Kanaleinheiten (K) Zeit/Raum-Koppler (39, 40) und zwischen den Kanal einheiten (K) und den "gehenden" Multiplexsignalleitungen (35a, 37a) Raum/Zeit-Koppler (41, 42) vorgesehen sind.

3. Flexibler Multiplexer nach Anspruch 1,
**dadurch gekennzeichnet,**
daß in den teilnehmerseitigen Anschlußeinheiten (7b-11b) Kanaleinheiten (K) mit einem äußeren Sprache/Dateneingang (1), mit einem äußeren Sprache/Datenausgang (2), mit einem äußeren Kennzeicheneingang (3) und mit einem äußeren Kennzeichenausgang (4) für jeweils gleich oder kleiner 32 kbit/s, zwischen den "kommenden" Multiplexsignalleitungen (36a, 38a) und den Kanaleinheiten (K) Zeit/Raum-Koppler und zwischen den Kanaleinheiten (K) und den "gehenden" Multiplexsignalleitungen (35a, 37a) Raum/Zeit-Koppler vorgesehen sind und
daß jeweils zwei Sprache/Daten-Signale (S/D) von äußeren Sprache/Dateneingängen (1) und jeweils zugehörige zwei Kennzeichensignale (Kz) an äußeren Kennzeicheneingängen (3) mit jeweils gleicher Zielrichtung als Duette in einem Kanalzeitschlitz des Sprache/Daten- und des Kennzeichenmultiplexsignals zusammengefaßt werden.

4. Flexibler Multiplexer nach Anspruch 1,
**dadurch gekennzeichnet,**
daß in den teilnehmerseitigen Anschlußeinheiten (7b-11b) Kanaleinheiten (K) mit einem äußeren Sprache/Dateneingang (1), mit einem äußeren Sprache/Datenausgang (2), mit einem äußeren Kennzeicheneingang (3) und mit einem äußeren Kennzeichenausgang (4) für jeweils gleich oder kleiner 16 kbit/s, zwischen den "kommenden" Multiplexsignalleitungen (36a, 38a) und den Kanaleinheiten (K) Zeit/Raum-Koppler und zwischen den Kanaleinheiten (K) und den "gehenden" Multiplexsignalleitungen (35a, 37a) Raum/Zeit-Koppler vorgesehen sind und
daß jeweils vier Sprache/Daten-Signale (S/D) an äußeren Sprache/Dateneingängen (1) und jeweils zugehörige vier Kennzeichensignale (Kz) an äußeren Kennzeicheneingängen (3) mit jeweils gleicher Zielrichtung als Quartette in je einem Kanalzeitschlitz des Sprache/Daten- und des Kennzeichenmultiplexsignals zusammengefaßt werden.

# FIG 1

FIG 2

64 kbit/s

2,048 Mbit/s

FIG 3

12a-14a

FIG 6

12b-14b

FIG 4

FIG 5

EP 0 395 780 A1

89 P 1 3 4 6 E

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | "PDMX-Programmierbarer Digitalmultiplexer für die 2-MBIT/S-Netzebene", Seiten 1-28, Siemens AG, München, DE * Seite 11, Bild 10 * --- | 1 | H 04 J 3/16 |
| A | US-A-4 689 788 (WURZBURG et al.) * Spalte 1, Zeile 53 - Spalte 2, Zeile 9; Spalte 3, Zeilen 33-49; Spalte 4, Zeilen 39-44; Spalte 4, Zeile 59 - Spalte 6, Zeile 15; Spalte 7, Zeilen 12-18 * --- | 1-4 | |
| A | I.E.E.E. JOURNAL ON SELECTED AREAS IN COMMUNICATIONS, Band SAC-5, Nr. 1, Januar 1987, Seiten 26-32, IEEE, New York, US; K.P. KRETSCH et al.: "A digital cross-connect system for digital data circuits" * Seiten 28-30, Absatz IV; Seite 30, rechte Spalte, Zeilen 4-24 * --- | 1-4 | |

**RECHERCHIERTE SACHGEBIETE (Int. Cl.5)**

| Kategorie | Kennzeichnung | Betrifft | Sachgebiete |
|---|---|---|---|
| A | US-A-4 809 270 (BAXTER et al.) * Spalte 1, Zeile 61 - Spalte 2, Zeile 8; Spalte 3, Zeilen 35-47; Spalte 3, Zeile 51 - Spalte 4, Zeile 25 * ------ | 1-4 | H 04 J |

Der vorliegende Recherchenbericht wurde für alle Patentansprüche erstellt

| Recherchenort | Abschlußdatum der Recherche | Prüfer |
|---|---|---|
| DEN HAAG | 09-01-1990 | VAN DEN BERG,J.G.J. |

EPO FORM 1503 03.82 (P0403)